# EUROPEAN PATENT SPECIFICATION

(11) **EP 2 395 425 B1**
(45) Date of publication and mention of the grant of the patent: **08.04.2015**
(21) Application number: 10305626.3
(22) Date of filing: 11.06.2010
(51) Int. Cl.: G06F 9/44, G06F 3/048, H04L 12/24

(54) **Fault resolution apparatus and related method**
Vorrichtung für Fehlerauflösung und dazugehöriges Verfahren
Appareil de resolution de defaillances et procÀ©dé associé

(43) Date of publication of application: 14.12.2011
(73) Proprietor: ALCATEL LUCENT, 92100 Boulogne-Billancourt (FR)
(72) Inventor: Van Leeuwen, Tom, 9032 Wondelgem (BE); Liekens, Werner, 2860, Sint Katelijne Waver (BE)
(74) Representative: ALU Antw Patent Attorneys

(56) References cited:
- EP-A1- 2 184 903
- DE-A1- 10 208 146
- US-A1- 2006 265 662
- US-A1- 2008 086 505
- LENJA SOROKIN ET AL: "Flex RIA Development and Usability Evaluation" 3 December 2007 (2007-12-03), WEB INFORMATION SYSTEMS ENGINEERING Â WISE 2007 WORKSHOPS; [LECTURE NOTES IN COMPUTER SCIENCE], SPRINGER BERLIN HEIDELBERG, BERLIN, HEIDELBERG, PAGE(S) 447 - 452 , XP019084186 ISBN: 978-3-540-77009-1 * sections 3.1, 3.2 *
- JEAN VANDERDONCKT ET AL: "A Model-Based Approach for Developing Vectorial User Interfaces" WEB CONGRESS, 2009. LE-WEB '09. LATIN AMERICAN, IEEE, PISCATAWAY, NJ, USA, 9 November 2009 (2009-11-09), pages 52-59, XP031571495 ISBN: 978-0-7695-3856-3

## Description

The present invention relates to a fault resolution apparatus and a method to check correct installation of a graphical user interface component on a framework of a display of a device in a home network.

More and more networked devices in a home network are running a framework of a display such as an Adobe Flash framework which runs e.g. a touch screen, a mobile phone, a set-top-box. These displays show a graphical user interface, also known as a "GUI" , and offers a consistent visual language to represent information stored in the home network devices. This makes it easier for people with little computer skills to work with and use computer software.

In the event when new services or so called applications are installed on e.g. a service home gateway in a home network, a new graphical user interface component of a graphical user interface on the display of a device needs to be installed on the framework of this display.

Normally the framework comprises an installer component, or shortly called installer, for installing such a graphical user interface component, of an application that is running on a service home gateway in a home network, on the framework.

The graphical user interface on the display will allow hereby the end-user to control the new application via the display of its device.

A method for computer-assisted generation of a graphical user interface is disclosed in DE 10208146 A1.

Nowadays there is no way for a remote management system to verify whether a graphical user interface component has been correctly installed and is running correctly on the framework of the display of the designated device. A method to automatically check correct installation of a graphical user interface component on a framework of a display of a device is not known. Indeed, the end-user needs to visually verify on his device whether the new graphical user interface component is installed and running correctly. In the event when the graphical user interface is not properly installed or is not properly working, the user will need to contact his helpdesk support.

An object of the present invention is to provide a method to check correct installation of a graphical user interface component similar to the above known visual verification but which is automatically performed; and to provide a fault resolution apparatus that performs this method; and to a generator component that generates the required information

According to the invention, this object is achieved due to the fact that the fault resolution apparatus of the present application is used to automatically determine correct installation of a graphical user interface component on a framework of a display of a device. As mentioned, the framework comprises an installer to install such a graphical user interface component of an application which is running on a service home gateway coupled to the device in the home network. The apparatus of this application comprises for this automatic determination an analyzing means for analyzing framework data information. This framework data information is generated by a generator component of the framework. The framework data information comprises at least one of:
- system information of the framework which is retrieved from the framework by the generator component; and
- a display list of the framework which is collected from the framework by the generator component; and
- event information which is received by the generator component from the installer or from the framework upon its subscription to events of the installer or of the framework respectively. The analyzing means furthermore generates a result that comprises whether the graphical user interface component of the application is correctly installed on the framework or not.

Based upon the result, further action can automatically be taken whereby e.g. contacting of the helpdesk might be avoided. Indeed, a management system can herewith pro-actively determine if there have been any problems when installing the new application with a graphical user interface component in the home network and fix the problem remotely, without any user intervention.

This becomes especially clear by means of a preferred embodiment whereby the fault resolution apparatus is comprised in a remote management back-end device of a service provider network that is coupled to the home network. Hereby the back-end device retrieves the framework data information from the home network for being analyzed by the analyzing means of the apparatus. Hereby a remote management method and apparatus are defined by this present application in order to pro-actively check whether the graphical user interface component is installed and running correctly on the framework of the device.

Alternatively, the fault resolution apparatus can be comprised in the device itself. This is especially interesting in the event when a first analysis of the framework data information might be required at the framework of the device itself. For example, when the newly installed graphical user interface component is unable to access an image from the Internet, an HTTPStatusEvent with the Hypertext Transfer Protocol HTTP fault code is normally thrown. This fault code is typically a string with a HTTP failure code (e.g. 401 Unauthorized or 503 Service Unavailable). Accordingly, such local fault resolution apparatus on the device can parse this information and decide whether it is still necessary to notify the service home gateway. Indeed, in the event of e.g. an HTTP 503 Service Unavailable failure code, the network server which is hosting the image file is temporarily inaccessible and might become accessible again in the near future. In this case the fault resolution apparatus according to the present application and being comprised in the device itself decides not to escalate this fault because it might be resolved during the next time when the user boots its display device.

According to such an implementation the fault resolution apparatus might comprise the generator component itself. Hereby, the generator component comprises at least one of:
- retrieving means to retrieve system information of the framework from the framework; and
- collecting means to collect a display list of the framework from the framework; and
- receiving means to receive event information from the installer component or from the framework, upon subscription to events of the installer component or of the framework itself; and
- generating means to generate the framework data information based upon at least one of the system information, the display list and the event information. Finally the generator component forwards the framework data information towards the analyzing means.

A further implementation is that the generator component is permanently installed on the framework.

However, an alternative implementation here is that the generator component is implemented by means of a graphical user interface component and that the generator component is temporarily installed by the installer component of the framework and is deleted from the framework after having generated the framework data information.

A further feature of such a generator component that is implemented by means of a graphical user interface component is that when the generator component is associated to a graphical user interface which is invisible on the display to an end-user of the device.

Furthermore, the framework data information can alternatively be further forwarded by the generator component towards the service home gateway for first or further analysis. The framework data information is preferably forwarded for storage in a memory in relation to the application. Hereby the framework data information can be retrieved from this memory, at the right time, for analyzing by the analyzing means which is located for instance, as mentioned above, in a remote management back-end device of a service provider network or at the service home gateway. The advantage of such an implementation is that the end-user device is relieved from memory capacity.

According to such an implementation the fault resolution apparatus is preferably included in a remote management back-end device, as described above, or in the service home gateway itself. When the fault resolution apparatus is comprised in the service home gateway, the service home gateway is enabled to provide a further analysis of the framework data information. In the event when the device itself is preferred to be kept with limited processing resources, such location of the fault resolution apparatus relieves the device from data processing.

For example, in the event when the fault resolution apparatus is comprised in the service home gateway, the analyzer of the apparatus receives the framework data information of the generator component whereby it can filter this information and retain only installation failure information for a specific application. Such analyzer analyses this information and detects for instance that the newly installed graphical user interface component, was unable to access an Internet URL e.g. to load an image. The analyzing means of such a fault resolution apparatus at a service home gateway generates a result that comprises whether the graphical user interface component is correctly installed on the framework or not, and moreover might comprise such information i.e. "unable to access an Internet URL for loading an image". This information might be forwarded to a decision making means of the fault resolution apparatus. This decision making means might generate a trigger for the home network router to verify its firewall rules and to verify thereby whether the display device is allowed to access this URL. In the event when the firewall rules of the home network router indicates e.g. that this device is not allowed to access the internet, the decision making means of the fault resolution apparatus might further trigger the home network router to update the firewall rules or otherwise to log this unlawful access attempt.

An additional feature of the fault resolution apparatus is that it comprises a decision making means (as mentioned above) to decide, based upon the content of the generated result, a further action being anyone of re-installation of the application and replacing the application with a new version application. Indeed, once the analysis of the framework data proves that e.g. the actual application is not working properly, the remote management back-end can decide upon a new installation of the application or upon an installation of another version of the application.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

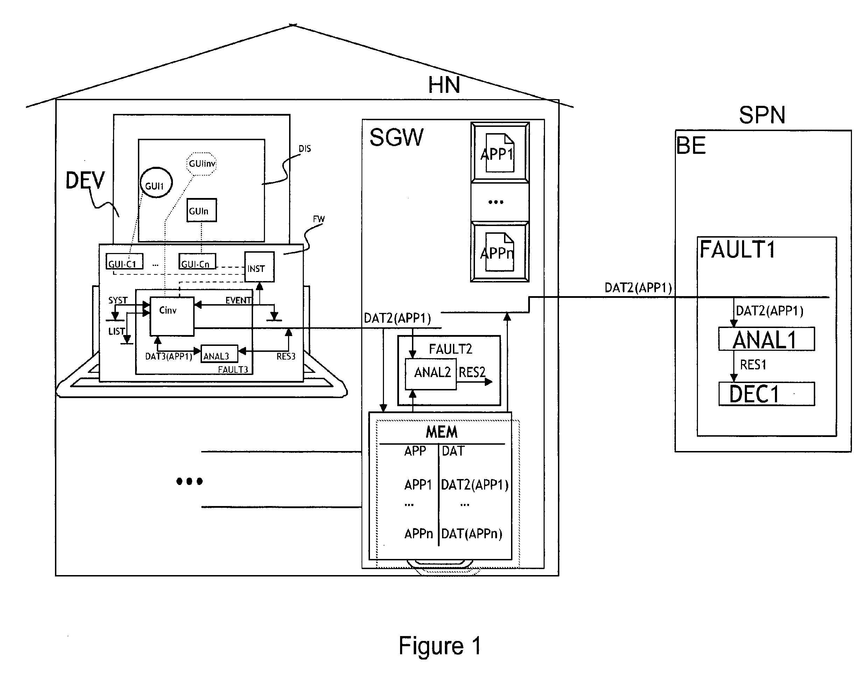

The above and other objects and features of the invention will become more apparent and the invention itself will be best understood by referring to the following description of an embodiment taken in conjunction with the accompanying drawings wherein Figure 1 represents an access telecommunication network with a home network and a service provider network.

The working of the fault resolution apparatus according to the present invention in accordance with its telecommunication environment that is shown in Figure 1 will be explained by means of a functional description of the different blocks shown therein. Based on this description, the practical implementation of the blocks will be obvious to a person skilled in the art and will therefor not be described in details. In addition, the principle working of the method to check correct installation of a graphical user interface component will be described in further detail.

Referring to Figure 1 a home network HN which is coupled to a service provider network is shown SPN.

The service provider network comprises a remote management back-end device BE which comprises on its turn a first possible embodiment for the fault resolution apparatus of the present application FAULT1. This first fault resolution apparatus comprises a first analyser ANAL1 and a first decider DEC1 i.e. two data processors.

The back-end device BE is coupled to a service home gateway SGW in the home network. The home gateway SGW serves a number of end-user devices such as the device DEV and is coupled thereto.

The service home gateway SGW comprises besides the applications APP1, ..., APPn which are running on it, a memory storage means MEM and a second possible embodiment of the fault resolution apparatus of the present application FAULT2 with its respective analyser ANAL2.

The device DEV comprises a display DIS such as e.g. a touch screen or a mobile phone display; and a framework FW such as e.g. a flash framework of a touch screen. The display DIS comprises graphical user interfaces e.g. GUI1, ..., GUIn that are each associated to a graphical user interface component on the framework FW such as e.g. GUI-C1, ..., GUI-Cn and that are respectively each associated to an application such as e.g. APP1, ... APPn which are running on the service home gateway SGW.

The framework FW further comprises an installer INST and a third possible embodiment of the fault resolution apparatus according to the present application FAULT3. This fault resolution apparatus FAULT3 comprises a third analyser ANAL3 and a generator Cinv.

Presume now a situation wherein the framework FW of the display DIS starts e.g. via a flash player of the device DEV. Creating code in the default flash file creates a dedicated Actionscript object which sets up a permanent XML socket connection with a dedicated OSGi application, called e.g. APPn, on the service home gateway SGW. This application APP1 is e.g. a management application on the service gateway SGW which controls the loading of graphical user interface components on the touch screen and communicates with the installer INST. This Actionscript object has a kind of loader method that can be triggered by the service home gateway SGW via the socket connection to retrieve a new flash object i.e. a graphical user interface component such as GUI-C1 from the service home gateway SGW and load it on the framework FW. This loader method can be implemented by means of the installer INST on the framework i.e. the installer INST installs upon a trigger a new component on the framework. This new component such as a flash object e.g. GUI-C1 is typically a graphical user interface component GUI-C1 of the application APP1 that is running on the service home gateway SGW and is used to offer the end-user a graphical user interface GUI1 to control this application APP1 via the display such as the touch screen. In this way Figure 1 shows GUI1 coupled with a dotted line to its GUI-C1 component and whereby application APP1 can be controlled by the end-user of the device DEV1 via this graphical user interface GUI1.

The basic idea of the present application is to automatically analyse framework data information in order to generate automatically a result which reveals the fact whether this graphical user interface component GUI-C1 of the application APP1 is correctly installed and correctly working.

This analyzing can be performed at different places in the network i.e. at the service provider network or at the service home gateway or at the device itself. This is shown in Figure 1 with the three fault resolution apparatus FAULT1, FAULT2 or FAULT3. Each apparatus comprises therefore each time an analyzer ANAL 1, ANAL2 or ANAL3 for the reception and analysis of this framework data information such as DAT3(APP1) or DAT2(APP1).

The framework data information DAT3(APP1) or DAT2(APP1) is received from a generator component Cinv which is typically located in the framework of the device DEV. The framework data information is generated from at least one of the three following data:
- system information SYST of the framework which is retrieved from the framework by the generator Cinv; and
- a display list LIST of the framework e.g. the display list of the flash framework, which is collected from the framework by the generator Cinv; and
- event information EVENT which is received by the generator component Cinv from the installer INST or from the framework, upon subscription to events of anyone of the installer INST or the framework FW.

All this information such as the flash system information SYST, Loaderlnfo messages EVENT and the display list LIST are grouped by the generator component Cinv and used by the respective analyzers.

The analyzer ANAL1, ANAL2 or ANAL3 analyzes the data and generates thereby a result that comprises whether the graphical user interface component is correctly installed on the framework FW or not.

Some examples of the kind of analyzing of the framework data information is give now:
- since e.g. this display list LIST comprises an ordering of all visual objects shown on the display of the device DEV in a hierarchical way, the display list LIST shows the presence of the graphical user interface GUI1 for Application APP1 or not. Indeed if a problem occurs while loading the new graphical user interface component GUI-C1, this component is not displayed in the list; and
- when the generator Cinv subscribes to events from the installer INST, the installer will also distribute to this generator Cinv so called "Loaderlnfo events" in the event when e.g. a loading of an Actionscript object such as e.g. installation of the graphical user interface component GUI-C1 fails. So, logging information received via the installer-events can reveal a failed installation.

Now, in the event when the fault resolution apparatus is comprised in the device itself the generator component Cinv can be comprised in the apparatus itself. In order to generated the required information the generator Cinv comprises at least one of the following functional blocks:
- a retriever (not shown) to retrieve the system information SYST (shown) of the framework from the framework; and
- collector (not shown) to collect the display list LIST (shown) of the framework from the framework; and
- a receiver (not shown) to receive the event information EVENT (shown) from anyone of the installer INST or the framework FW itself, upon subscription to installer-events of the installer INST or to framework-event of the framework itself; and
- the generator to generate the framework data information, see DAT3(APP1), based upon either one or all of the system information SYST, display list LIST and event information EVENT and to forward the framework data information towards the analyzer ANAL 1.

Although that the generator Cinv can be permanently installed on the framework, in order to save memory capacity and processing capacity the generator can be implemented by means of a graphical user interface component. Hereby the generator component Cinv is temporarily installed by said installer INST and is deleted from the framework after having generated the required framework data information. In this way a special flash object i.e. the generator Cinv is created by the installer INST and runs its special action-script code to retrieve, collect and receive the information from the flash framework it runs on. The code of the generator Cinv specifies as such that it has limited lifetime whereby the generator only uses the resources of the platform for a limited amount of time.

In addition the code of the generator Cinv can as well specify that it is an invisible object i.e. that its graphical user interface is not shown to the end-user of the device DEV.

As mentioned earlier the framework data information is forwarded by the generator component Cinv of the device DEV to the respective analyzer which might be located at the service home gateway SGW or even at the remote back-end device BE. It has to be explained here that with the wording "forwarding" it is meant that the date is transmitted towards the analyzers. This transmission can be executed upon initiative of the generator Cinv itself or upon trigger of the respective analyzer. Or even more the data can be received in an indirect way at the analyser. Indeed, the transmission doesn't need to be performed in a direct way from the generator Cinv to the analyzer, but can be stored on it's way in a memory MEM in relation to the respective application APP1. This is shown in Figure 1. Hereby the framework data information e.g. DAT2(APP1)) is forwarded by the generator Cinv to the memory MEM in the service home gateway, either directly as DAT2(APP1) or either after a first analysis by FAULT3 as being integrated in its result RES3 i.e. RES3(DAT3(APP1)) (not shown).

The above mentioned XML socket connection can be used for this purpose of forwarding.

At the service home gateway SGW the received data can be stored directly DAT2(APP1) into the memory MEM or can first be further analyzed by the second fault resolution apparatus FAULT2 before storage. In this way the data is stored as being integrated in the second result RES2 i.e. RES2(DAT2(APP1)) (not shown).

The data is stored until either the local fault resolution apparatus FAULT2 or the fault resolution apparatus at the back-end system FAULT1 decides to retrieve it.

The from the memory MEM retrieved framework data information can first locally be analyzed by FAULT2 in order to be transmitted to the back-end for final analysis by the first fault resolution apparatus FAULT1.

The aim of the above mentioned different scenario's is that the framework data information which contains SYST, LIST or EVENT framework information is analyzed by one of the analyzers ANAL1, ANAL2 or ANAL3 in order to generate a result whether the GUI component is correctly installed and correctly working or not.

In order to transmit the framework data information from the home network HN to the service provider network SPN a TR-069 active notification can be used. The service home gateway can trigger the back-end of the service provider network SPN to retrieve the data for analysis.

Based upon the content of the result being generated by the analyzer, the decider DEC in e.g. the back-end system can then decide to reinstall the entire application APP1 or to replace it with a new version or fix the problem in another manner.

So, in this way, the remote management back-end of the service provider is enabled to retrieve the framework data information from the device DEV directly or from the memory MEM in the service home gateway SGW and feeds it to its fault resolution engine FAULT1 and tries to repair the problem e.g. by reinstalling the application APP1 or by replacing the application APP1 by a new version.

Finally, the method to check correct installation of a graphical user interface component GUI1 on a framework FW of a display of a device DEV, is automatically performed by the fault resolution apparatus FAULT1 and/or FAULT2 and/or FAULT3 and comprises the steps of
- analyzing by an analyzer ANAL1; ANAL2; ANAL3 framework data information which is generated by the generator Cinv and which comprises at least one of system information SYST of the framework, a display list LIST of the framework and event information EVENT being received by the generator component Cinv from the installer INST upon subscription to installer-events of the installer INST; and
- generating by the analyzer a result comprising whether said graphical user interface component GUI-C1 being correctly installed on the framework FW.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A fault resolution apparatus (FAULT1; FAULT2; FAULT3) **characterized in that** said apparatus is used to automatically determine correct installation of a graphical user interface component (GUI-C1) on a framework (FW) of a display of a device (DEV) in a home network, said graphical user interface component (GUI-C1) which is associated to an application that is running on a service home gateway coupled to said device, being installed by an installer component (INST) of said framework,
said apparatus comprises analyzing means (ANAL1; ANAL2; ANAL3) for receiving framework data information (DAT(APP1)) from a generator component (Cinv) of said framework and for analyzing said framework data information (DAT(APP1)), said framework data information being generated by said generator component (Cinv) based on at least one of
- system information (SYST) of said framework being retrieved from said framework by said generator component; and
- a display list (LIST), comprising an ordering of all visual objects shown on the display of the device (DEV) in a hierarchical way, of said framework being collected from said framework by said generator component (Cinv); and
- event information (EVENT), comprising logged information regarding failed installation of a graphical user interface component, being received by said generator component (Cinv) from anyone of said installer (INST) and said framework (FW), upon subscription to events of, respectively, said installer or said framework; and
said analyzing means is further comprised to determine that said graphical user interface component (GUI-C1) failed to be correctly installed and running on said framework (FW) when said graphical user interface component is not in the display list or when the logged information in the event information reveals a failure of installation of the graphical user interface component.

2. The fault resolution apparatus of claim 1, **characterized in that** said fault resolution apparatus (FAULT1) being comprised in a remote management back-end device (BE) of a service provider network (SPN) coupled to said home network whereby said back-end device (BE) retrieves said framework data information (DAT(APP1)) from said home network for analyzing by said analyzing means (ANAL1).

3. The fault resolution apparatus of claim 1, **characterized in that** said fault resolution apparatus (FAULT3) being comprised in said device (DEV).

4. The fault resolution apparatus of claim 3, **characterized in that** said fault resolution apparatus (FAULT3) comprises said generator component (Cinv) and that said generator component (Cinv) comprises at least one of:
- retrieving means to retrieve system information (SYST) of said framework from said framework; and
- collecting means to collect a display list (LIST) of said framework from said framework; and
- receiving means to receive event information (EVENT) from said installer component (INST) upon subscription to installer events of said installer component (INST); and
- generating means to generate framework data information (DAT(APP1)) based upon at least one of said system information (SYST), display list (LIST) and event information (EVENT); and that said generator component (Cinv) forwards said framework data information towards said analyzing means (ANAL1).

5. The fault resolution apparatus of claim 3, **characterized in that** said generator component (Cinv) being permanently installed on said framework.

6. The fault resolution apparatus of claim 3, **characterized in that** said generator component is implemented by means of a graphical user interface component and that said generator component is temporarily installed by said installer component (INST) is deleted from said framework after having generated said framework data information.

7. The fault resolution apparatus of claim 6, **characterized in that** said generator component being associated to a graphical user interface (GUIinv) being invisible on said display to an end-user of said device.

8. The fault resolution apparatus of claim 1, **characterized in that** said fault resolution apparatus (FAULT2) being comprised in said service home gateway (SGW).

9. The fault resolution apparatus of claim 1, **characterized in that** said framework data information (DAT(APP1)) being forwarded by said generator component (Cinv) of said device (DEV) to said service home gateway (SGW) for storage in a memory (MEM) in relation to said application (APP1) and whereby said framework data information (DAT(APP1)) being retrieved from said memory for analyzing by said analyzing means (ANAL1; ANAL2).

10. The fault resolution apparatus of claim 1 **characterized in that** it further comprises a decision making means (DEC) to decide, based upon the content of said result, a further action being anyone of re-installation of said application (APP1) and replacing said application (APP1) with a new version application.

11. A method to check correct installation of a graphical user interface component (GUI1) on a framework (FW) of a display of a device (DEV), said graphical user interface component, which is associated to an application that is running on a service home gateway coupled to said device, being installed by an installer component (INST) of said framework,
**characterized in that** said method being automatically performed by a fault resolution apparatus and comprises the steps of
- analyzing by an analyzing means (ANAL1; ANAL2; ANAL3) framework data information (DAT(APP1)) being generated by a generator component (Cinv) and based on at least one of system information (SYST) of said framework being retrieved from said framework by said generator component; and a display list (LIST), comprising an ordering of all visual objects shown on the display of the device (DEV) in a hierarchical way, of said framework being collected from said framework by said generator component (Cinv); and event information (EVENT), comprising logged information regarding failed installation of a graphical user interface component, being received by said generator component (Cinv) from anyone of said installer component (INS) and said framework (FW), upon subscription to events of, respectively, said installer component (INST) or said framework (FW); and
- determining by said analyzing means that said graphical user interface component (GUI-C1) failed to be correctly installed on said framework (FW) when said graphical user interface component is not in the display list or when the logged information in the event information reveals a failure of installation of the graphical user interface component.

## Patentansprüche

1. Vorrichtung zur Fehlerauflösung (FAULT1; FAULT2; FAULT3), **dadurch gekennzeichnet, dass** die besagte Vorrichtung verwendet wird, um automatisch die korrekte Installation einer grafischen Benutzerschnittstellenkomponente (GUI-C1) auf einem Framework (FW) eines Displays einer Einrichtung (DEV) in einem Heimnetzwerk zu bestimmen, wobei die besagte grafische Benutzerschnittstellenkomponente (GUI-C1), welche mit einer auf einem an die besagte Einrichtung gekoppelten Dienst-Heim-Gateway laufenden Anwendung assoziiert ist, durch eine Installierer-Komponente (INST) des besagten Frameworks installiert wird,
wobei die besagte Vorrichtung ein Analysemittel (ANAL1; ANAL2; ANAL3) umfasst, um Framework-Dateninformationen (DAT (APP1)) von einer Generatorkomponente (Cinv) des besagten Frameworks zu empfangen und die besagten Framework-Dateninformationen (DAT (APP1)) zu analysieren, wobei die besagten Framework-Dateninformationen von der besagten Generatorkomponente (Cinv) auf der Basis mindestens eines der folgenden erzeugt werden:
- Systeminformationen (SYST) des besagten Frameworks, die durch die besagte Generatorkomponente von dem besagten Framework abgerufen werden; und
- eine Display-Liste (LIST), umfassend ein hierarchisches Ordnen aller auf dem Display der besagten Einrichtung (DEV) angezeigten visuellen Objekte, des besagten Frameworks, welche durch die besagte Generatorkomponente (Cinv) von dem besagten Framework eingeholt wird; und
- Ereignisinformationen (EVENT), umfassend protokollierte Informationen bezüglich einer Fehlinstallation einer grafischen Benutzerschnittstellenkomponente, die nach der Subskription von Ereignissen jeweils des besagten Installierers oder des besagten Frameworks beliebig entweder von dem besagten Installierer (INST) oder von dem besagten Framework (FW) an der besagten Generatorkomponente (Cinv) empfangen werden; und
wobei das besagte Analysemittel weiterhin dafür vorgesehen ist, zu bestimmen, dass die besagte grafische Benutzerschnittstellenkomponente (GUI-C1) nicht korrekt auf dem besagten Framework (FW) installiert wurde und nicht korrekt läuft, wenn die besagte grafische Benutzerschnittstellenkomponente nicht auf der Display-Liste erscheint, oder wenn die protokollierten Informationen in den Ereignisinformationen eine Fehlinstallation der grafischen Benutzerschnittstellenkomponente anzeigen.

2. Vorrichtung zur Fehlerauflösung nach Anspruch 1, **dadurch gekennzeichnet, dass** die besagte Vorrichtung zur Fehlerauflösung (FAULT1) in einer Fernverwaltungs-Back-End-Einrichtung (BE) eines Dienstanbieternetzwerks (SPN), welche an das besagte Heimnetzwerks gekoppelt ist, umfasst ist, wobei die besagte Back-End-Einrichtung (BE) die besagten Framework-Dateninformationen (DAT(APP1)) für die Analyse durch das besagte Analysemittel (ANAL1) aus dem besagten Heimnetzwerk abruft.

3. Vorrichtung zur Fehlerauflösung nach Anspruch 1, **dadurch gekennzeichnet, dass** die besagte Vorrichtung zur Fehlerauflösung (FAULT3) in der besagten Einrichtung (DEV) umfasst ist.

4. Vorrichtung zur Fehlerauflösung nach Anspruch 3, **dadurch gekennzeichnet, dass** die besagte Vorrichtung zur Fehlerauflösung (FAULT3) die besagte Generatorkomponente (Cinv) umfasst, und dass die besagte Generatorkomponente (Cinv) zumindest eines der folgenden umfasst:
- Abrufmittel zum Abrufen von Systeminformationen (SYST) des besagten Frameworks aus dem besagten Framework; und
- Sammelmittel zum Sammeln einer Display-Liste (LIST) des besagten Frameworks aus dem besagten Framework; und
- Empfangsmittel zum Empfangen von Ereignisinformationen (EVENT) von der besagten Installiererkomponente (INST) nach Subskription von Installiererereignissen der besagten Installiererkomponente (INST); und
- Erzeugungsmittel zum Erzeugen von Framework-Dateninformationen (DAT(APP1)) auf der Basis von mindestens einem der besagten folgenden: Systeminformationen (SYST), Display-Liste (LIST) und Ereignisinformationen (EVENT);
und dass die besagte Generatorkomponente (Cinv) die besagten Framework-Dateninformationen an das besagte Analysemittel (ANAL1) weiterleitet.

5. Vorrichtung zur Fehlerauflösung nach Anspruch 3, **dadurch gekennzeichnet, dass** die besagte Generatorkomponente (Cinv) permanent auf dem besagten Framework installiert ist.

6. Vorrichtung zur Fehlerauflösung nach Anspruch 3, **dadurch gekennzeichnet, dass** die besagte Generatorkomponente anhand einer grafischen Benutzerschnittstellenkomponente implementiert wird, und dass die besagte Generatorkomponente durch die besagte Installiererkomponente (INST) temporär installiert und nach der Erzeugung der besagten Framework-Dateninformationen aus dem besagten Framework entfernt wird.

7. Vorrichtung zur Fehlerauflösung nach Anspruch 6, **dadurch gekennzeichnet, dass** die besagte mit einer grafischen Benutzerschnittstelle (GUlinv) assoziierte Generatorkomponente für einen Endbenutzer der besagten Einrichtung nicht auf dem besagten Bildschirm sichtbar ist.

8. Vorrichtung zur Fehlerauflösung nach Anspruch 1, **dadurch gekennzeichnet, dass** die besagte Vorrichtung zur Fehlerauflösung (FAULT2) in dem besagten Dienst-Heim-Gateway (SGW) umfasst ist.

9. Vorrichtung zur Fehlerauflösung nach Anspruch 1, **dadurch gekennzeichnet, dass** die besagten Framework-Dateninformation (DAT(APP1)) durch die besagte Generatorkomponente (Cinv) der besagten Einrichtung (DEV) zur Speicherung in einem Speicher (MEM) in Bezug auf die besagte Anwendung (APPP1) an das besagte Dienst-Heim-Gateway (SGW) weitergeleitet werden, und wobei die besagten Framework-Dateninformationen (DAT(APP1)) zur Analyse durch das besagte Analysemittel (ANAL1; ANAL2) aus dem besagten Speicher abgerufen werden.

10. Vorrichtung zur Fehlerauflösung nach Anspruch 1, **dadurch gekennzeichnet, dass** sie weiterhin ein Entscheidungsbildungsmittel (DEC) umfasst, um auf der Basis des Inhalts des besagten Ergebnisses eine weitere Aktion, welche beliebig entweder die erneute Installation der besagten Anwendung (APP1) oder das Ersetzen der besagten Anwendung (APP1) durch eine neue Anwendungsversion ist, zu entscheiden.

11. Verfahren zur Prüfung der korrekten Installation einer grafischen Benutzerschnittstellenkomponente (GUI1) auf einem Framework (FW) eines Displays einer Einrichtung (DEV), wobei die besagte grafische Benutzerschnittstellenkomponente, welche mit einer auf einem an die besagte Einrichtung gekoppelten Dienst-Heim-Gateway laufenden Anwendung assoziiert ist, durch eine Installierer-Komponente (INST) des besagten Frameworks installiert wird,
**dadurch gekennzeichnet, dass** das besagte Verfahren automatisch von einer Vorrichtung zur Fehlerauflösung durchgeführt wird und die folgenden Schritte umfasst:
- Analysieren, durch ein Analysemittel (ANAL1; ANAL2; ANAL3), von Framework-Dateninformationen (DAT (APP1)), welche von einer Generatorkomponente (Cinv) erzeugt werden und mindestens auf entweder den Systeminformationen (SYST) des besagten Frameworks, welche durch die besagte Generatorkomponente aus dem besagten Framework abgerufen werden; einer Display-Liste (LIST), welche ein hierarchisches Ordnen aller auf dem Display der Einrichtung (DEV) angezeigten visuellen Objekte umfasst, des besagten Frameworks, welche durch die besagte Generatorkomponente (Cinv) von dem besagten Framework eingeholt wird; und Ereignisinformationen (EVENT), umfassend protokollierte Informationen bezüglich einer Fehlinstallation einer grafischen Benutzerschnittstellenkomponente, die nach der Subskription von Ereignissen jeweils der besagten Installiererkomponente (INST) oder des besagten Frameworks (FW) beliebig entweder von der besagten Installiererkomponente (INST) oder von dem besagten Framework (FW) an der besagten Generatorkomponente (Cinv) empfangen werden, basieren; und
- Bestimmen, durch das besagte Analysemittel, dass die besagte grafische Benutzerschnittstellenkomponente (GUI-C1) nicht korrekt auf dem besagten Framework (FW) installiert wurde, wenn die besagte grafische Benutzerschnittstellenkomponente nicht auf der Display-Liste erscheint, oder wenn die protokollierten Informationen in den Ereignisinformationen eine Fehlinstallation der grafischen Benutzerschnittstellenkomponente anzeigen.

## Revendications

1. Appareil de résolution de défaillances (FAULT1 ; FAULT2 ; FAULT3) **caractérisé en ce que** ledit appareil est utilisé pour déterminer automatiquement l'installation correcte d'un composant d'interface utilisateur graphique (GUI-C1) sur une structure (FW) d'un affichage d'un dispositif (DEV) dans un réseau domestique, ledit composant d'interface utilisateur graphique (GUI-C1), qui est associé à une application qui est exécutée sur une passerelle domestique de service couplée audit dispositif, étant installé par un composant d'installation (INST) de ladite structure,
ledit appareil comprend des moyens d'analyse (ANAL1 ; ANAL2 ; ANAL3) pour recevoir des informations de données de structure (DAT(APP1)) à partir d'un composant de génération (Cinv) de ladite structure et pour analyser lesdites informations de données de structure (DAT(APP1)), lesdites informations de données de structure étant générées par ledit composant de génération (Cinv) sur la base d'au moins un des éléments suivants :
- des informations de système (SYST) de ladite structure récupérées à partir de ladite structure par ledit composant de génération ; et
- une liste d'affichage (LIST), comprenant un classement de tous les objets visuels représentés sur l'affichage du dispositif (DEV) de manière hiérarchique, de ladite structure collectée à partir de ladite structure par ledit composant de génération (Cinv) ; et
- des informations d'évènements (EVENT), comprenant des informations consignées concernant l'échec de l'installation d'un composant d'interface utilisateur graphique, reçues par ledit composant de génération (Cinv) à partir d'un quelconque élément parmi ledit installateur (INST) et ladite structure (FW), lors de l'abonnement à des évènements, respectivement, dudit installateur ou de ladite structure ; et
lesdits moyens d'analyse permettant en outre de déterminer que l'installation correcte et l'exécution correcte sur ladite structure (FW) dudit composant d'interface utilisateur graphique (GUI-C1) ont échoué lorsque ledit composant d'interface utilisateur graphique n'est pas dans la liste d'affichage ou lorsque les informations consignées dans les informations d'évènements révèlent un échec d'installation du composant d'interface utilisateur graphique.

2. Appareil de résolution de défaillances selon la revendication 1, **caractérisé en ce que** ledit appareil de résolution de défaillances (FAULT1) est contenu dans un dispositif dorsal de gestion à distance (BE) d'un réseau de fournisseur de service (SPN) couplé audit réseau domestique, ledit dispositif dorsal (BE) récupérant lesdites informations de données de structure (DAT(APP1)) à partir dudit réseau domestique afin que lesdits moyens d'analyse (ANAL 1) les analysent.

3. Appareil de résolution de défaillances selon la revendication 1, **caractérisé en ce que** ledit appareil de résolution de défaillances (FAULT3) est contenu dans ledit dispositif (DEV).

4. Appareil de résolution de défaillances selon la revendication 3, **caractérisé en ce que** ledit appareil de résolution de défaillances (FAULT3) comprend ledit composant de génération (Cinv) et **en ce que** ledit composant de génération (Cinv) comprend au moins un des moyens suivants :
- des moyens de récupération pour récupérer des informations de système (SYST) de ladite structure à partir de ladite structure ; et
- des moyens de collecte pour collecter une liste d'affichage (LIST) de ladite structure à partir de ladite structure ; et
- des moyens de réception pour recevoir des informations d'évènements (EVENT) à partir dudit composant d'installation (INST) lors de l'abonnement à des évènements d'installation dudit composant d'installation (INST) ; et
- des moyens de génération pour générer des informations de données de structure (DAT(APP1)) sur la base desdites informations de système (SYST) et/ou de ladite liste d'affichage (LIST) et/ou desdites informations d'évènements (EVENT) ; et en ce que ledit composant de génération (Cinv) transfère lesdites informations de données de structure vers lesdits moyens d'analyse (ANAL1).

5. Appareil de résolution de défaillances selon la revendication 3, **caractérisé en ce que** ledit composant de génération (Cinv) est installé en permanence sur ladite structure.

6. Appareil de résolution de défaillances selon la revendication 3, **caractérisé en ce que** ledit composant de génération est mis en oeuvre au moyen d'un composant d'interface utilisateur graphique et **en ce que** ledit composant de génération est temporairement installé par ledit composant d'installation (INST) et est supprimé de ladite structure après avoir généré lesdites informations de données de structure.

7. Appareil de résolution de défaillances selon la revendication 6, **caractérisé en ce que** ledit composant de génération est associé à une interface utilisateur graphique (GUlinv) qui est invisible sur ledit affichage pour un utilisateur final dudit dispositif.

8. Appareil de résolution de défaillances selon la revendication 1, **caractérisé en ce que** ledit appareil de résolution de défaillances (FAULT2) est contenu dans ladite passerelle domestique de service (SGW).

9. Appareil de résolution de défaillances selon la revendication 1, **caractérisé en ce que** lesdites informations de données de structure (DAT(APP1)) sont transférées par ledit composant de génération (Cinv) dudit dispositif (DEV) vers ladite passerelle domestique de service (SGW) pour les stocker dans une mémoire (MEM) par rapport à ladite application (APP1), lesdites informations de données de structure (DAT(APP1)) étant récupérées dans ladite mémoire afin que lesdits moyens d'analyse (ANAL1 ; ANAL2) les analysent.

10. Appareil de résolution de défaillances selon la revendication 1 **caractérisé en ce qu'**il comprend en outre des moyens de prise de décision (DEC) pour décider, en fonction du contenu dudit résultat, d'une action supplémentaire qui est une quelconque action parmi la réinstallation de ladite application (APP1) et le remplacement de ladite application (APP1) par une nouvelle version de l'application.

11. Procédé pour vérifier l'installation correcte d'un composant d'interface utilisateur graphique (GUI1) sur une structure (FW) d'un affichage d'un dispositif (DEV), ledit composant d'interface utilisateur graphique, qui est associé à une application qui est exécutée sur une passerelle domestique de service couplée audit dispositif, étant installé par un composant d'installation (INST) de ladite structure,
**caractérisé en ce que** ledit procédé est automatiquement exécuté par un appareil de résolution de défaillances et comprend les étapes suivantes
- analyser à l'aide de moyens d'analyse (ANAL1 ; ANAL2 ; ANAL3) des informations de données de structure (DAT(APP1)) générées par un composant de génération (Cinv) et basées sur au moins une des informations de système (SYST) de ladite structure récupérées dans ladite structure par ledit composant de génération ; et une liste d'affichage (LIST), comprenant un classement de tous les objets visuels représentés sur l'affichage du dispositif (DEV) de manière hiérarchique, de ladite structure collectée à partir de ladite structure par ledit composant de génération (Cinv) ; et des informations d'évènements (EVENT), comprenant des informations consignées concernant l'échec de l'installation d'un composant d'interface utilisateur graphique, reçues par ledit composant de génération (Cinv) à partir d'un quelconque élément parmi ledit composant d'installation (INS) et ladite structure (FW), lors de l'abonnement à des évènements, respectivement, dudit composant d'installation (INST) ou de ladite structure (FW) ; et
- déterminer à l'aide desdits moyens d'analyse que l'installation correcte dudit composant d'interface utilisateur graphique (GUI-C1) sur ladite structure (FW) a échoué lorsque ledit composant d'interface utilisateur graphique n'est pas dans la liste d'affichage ou lorsque les informations consignées dans les informations d'évènements révèlent un échec d'installation du composant d'interface utilisateur graphique.
